# EUROPEAN PATENT SPECIFICATION

(11) **EP 3 827 920 B1**
(45) Date of publication and mention of the grant of the patent: **20.09.2023**
(21) Application number: 20206637.9
(22) Date of filing: 10.11.2020
(51) Int. Cl.: B23K 9/09, B23K 9/095, B23K 9/10, B23K 9/173

(54) **METHOD OF ARC WELDING CONTROL**
VERFAHREN ZUR STEUERUNG VON LICHTBOGENSCHWEISSEN
PROCÉDÉ DE COMMANDE D'UN SOUDAGE À L'ARC

(30) Priority: 27.11.2019 JP 2019213800
(43) Date of publication of application: 02.06.2021
(73) Proprietor: DAIHEN Corporation, Osaka-shi, Osaka 532-8512 (JP)
(72) Inventor: TAKADA, Kento, Osaka-shi, Osaka 532-8512 (JP)
(74) Representative: Boult Wade Tennant LLP

(56) References cited:
- WO-A1-2018/079183
- JP-A- 2019 089 099
- US-A1- 2013 153 557

## Description

### FIELD

The present disclosure relates to an arc welding control method to perform welding by using shield gas that contains 60 volume percent or more of inert gas, and alternately switching feeding of a welding wire between a short-circuiting period and an arc period to one another repeatedly, as defined in the preamble of claim 1 (see for example JP-A-2019-089099).

### BACKGROUND

In a general consumable electrode type arc welding, welding is performed by feeding a welding wire which is a consumable electrode by a constant speed, and generating an arc between the welding wire and the base material. In the consumable electrode type arc welding, it is often the case to have a welding status where the welding wire and the base material alternately repeat the short-circuiting period and the arc period.

To further improve the welding quality, the forward/backward feeding arc welding is suggested where the feeding of the welding wire is alternately switched between the forward feeding and the backward feeding (see, for example, JP-A-2018-001270). This forward/backward feeding arc welding can, as compared to the conventional technique of a constant feeding speed, improve the repeating cycle of the short circuiting period and the arc period can be stabilized, and therefore the welding quality can be improved in that the generation of the sputtering is reduced, the bead appearance is improved, and so forth.

### SUMMARY

In the forward/backward feeding arc welding, variation of the cycle of the short-circuiting period and the arc period is suppressed and the transfer of droplet is certainly performed during the short-circuiting period, to thereby improve the welding quality. However, in the forward/backward feeding arc welding, in the case where the shield gas primarily composed of inert gas is used, when the welding current value during the arc period increases and surpasses the critical value, droplet transfers during the arc period. If so, the variation of the cycle of the short-circuiting period and the arc period becomes large, and the transfer of droplet does not occur in synchronization with the short-circuiting period. As a result, there occurs a problem that the welding quality deteriorates.

As such, the present disclosure is directed to provide an arc welding control method for securing a favorable welding quality even if shield gas primarily composed of inert gas is used in the forward/backward feeding arc welding.

For solving the above problem, according to the present invention, an arc welding control method is provided as set out in claim 1. This method includes the following.

Shield gas containing 60 volume percent or more of inert gas is used, feeding of a welding wire is alternately switched between forward feeding and backward feeding, and a short-circuiting period and an arc period are repeated.

A first arc period where a first arc current Ia1 is fed, a second arc period where a second arc current Ia2 is fed, and a third arc period where a third arc current Ia3 is fed are switched over time during the arc period, and are controlled so that an relationship Ia1 > Ia2 > Ia3 holds.

The first arc current Ia1 is set to a critical current value or more where a droplet transfer status is a spray transfer status, the first arc period is set to a short time length that a droplet transfer does not occur during the first arc period, and as a result a droplet transfer occurs in synchronization with the short-circuiting period.

The second arc current Ia2 is set to be less than the critical current value.

Favorably, a constant current control is performed during the first arc period.

Favorably, a constant voltage control is performed during the second arc period.

According to the present invention, favorable welding quality can be secured even if shield gas primarily composed of inert gas is used in the forward/backward feeding arc welding.

### BRIEF DESCRIPTION OF DRAWINGS

Fig.1 is a block diagram of a welding power supply for conducting the arc welding control method according to an embodiment of the present disclosure.
Fig.2 is a timing chart of the respective signals at the welding power supply of Fig.1, showing the arc welding control method according to an embodiment of the present disclosure.

### EMBODYMENTS

Preferred embodiments of the present invention are described below with reference to drawings.

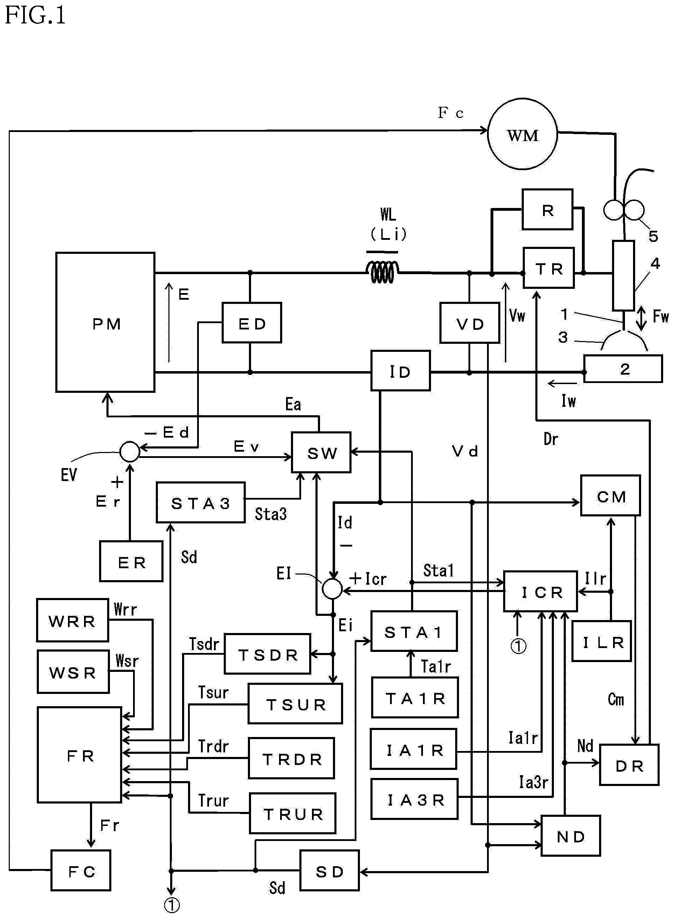

Fig. 1 is a block diagram of a welding power supply for conducting the arc welding method according to an embodiment of the present disclosure. Below, the respective blocks are explained with reference to Fig. 1.

A main power supply circuit PM receives an input of a voltage from a commercial power supply such as a three-phase 200V power supply (not shown), performs output control by inverter control and so forth according to a discrepancy amplification signal Ea to be described later, and outputs an output voltage E. The main power supply circuit PM includes, though not shown, for example, a primary rectifier for rectifying a current from a commercial power supply into a DC, a smoothing condenser for smoothing the rectified DC current, an inverter circuit driven by the above discrepancy amplification signal Ea for converting the smoothed DC to a high frequency AC, a high frequency transformer for lowering the voltage value of the high frequency AC so that it is appropriate for welding, and a secondary rectifier for rectifying the lowered high frequency AC voltage into a DC voltage.

A reactor WL smooths the above output voltage E. The inductance value of this reactor WL is, for example, 100 µH.

The feeding motor WM receives an input of a feeding control signal Fc to be described later, and feeds the welding wire 1 at a feeding speed Fw by alternately repeating a forward feeding and a backward feeding. As the forward feeding motor WM, a motor with quick transient responsivity is used. For quickening a change rate and a reversal of the feeding direction of the feeding speed Fw of the feeding wire 1, the feeding motor WM may be installed at a location close to the tip of a welding torch 4. Further, two sets of feeding motors WM may be used to have a push-pull style feeding system.

The welding wire 1 is fed through a welding torch 4 by a rotation of a feeding roll 5 combined to the above feeding motor WM, an arc 3 occurs between the welding torch and a base material 2. Between a power feeding chip (not shown) inside the welding torch 4 and the base material 2 a welding voltage Vw is applied, and a welding current Iw runs therebetween. From the tip of the welding torch 4 shield gas (not shown) is ejected. The shield gas is primarily composed of inert gas, and is, for example, 100% argon gas, 80% Argon gas + 20% Carbon dioxide gas, 98% argon gas + 2% oxygen gas, and so forth.

An output voltage setting circuit ER outputs a predetermined output voltage setting signal Er. An output voltage detection circuit ED detects and smooths the above output voltage E, and outputs an output voltage detection signal Ed.

A voltage discrepancy amplification circuit EV receives inputs of the above output voltage setting signal Er and the above output voltage detection signal Ed, amplifies a discrepancy between the output voltage setting signal Er (+) and an output voltage detection signal Ed (-), and outputs a voltage discrepancy amplification signal Ev.

A current detection circuit ID detects the above welding current Iw, and outputs a current detection signal Id. A voltage detection circuit VD detects the above welding voltage Vw, and outputs a voltage detection signal Vd. A short-circuiting determination circuit SD receives an input of the above voltage detection signal Vd, and outputs a short-circuiting determination signal Sd. When the voltage detection signal is lower than a predetermined short-circuiting determination value (around 10V), the process is determined to be in a short-circuiting period and the short-circuiting determination signal Sd is set to a "High" level, and when the voltage detection signal Vd is equal to or higher than the short-circuiting determination value, the process is determined to be in an arc period and the short-circuiting determination signal Sd is set to a "Low" level.

A forward feeding acceleration period setting circuit TSUR outputs a predetermined forward feeding acceleration period setting signal Tsur.

A forward feeding deceleration period setting circuit TSDR outputs a predetermined forward feeding deceleration period setting signal Tsdr.

A backward feeding acceleration period setting circuit TRUR outputs a predetermined backward feeding acceleration period setting signal Trur.

A backward feeding deceleration period setting circuit TRDR outputs a predetermined backward feeding deceleration period setting signal Trdr.

A forward feeding peak value setting circuit WSR outputs a predetermined forward feeding peak value setting signal Wsr.

A backward feeding peak value setting circuit WRR outputs a predetermined backward feeding peak value setting signal Wrr.

The feeding speed setting circuit FR receives inputs of the above forward feeding acceleration period setting signal Tsur, the above forward feeding deceleration period setting signal Tsdr, the above backward feeding acceleration period setting signal Trur, the above backward feeding deceleration period setting signal Trdr, the above forward feeding peak value setting signal Wsr, the above backward feeding peak value setting signal Wrr, and the above short-circuiting determination signal Sd, and outputs a feeding speed pattern generated by the following processing as a feeding speed setting signal Fr. When the feeding speed setting signal Fr is 0 or more, the process is determined to be in the forward feeding period, and the feeding speed setting signal Fr is less than 0, the process is determined to be in the backward feeding period.
1) During the forward feeding acceleration period Tsu determined by the forward feeding acceleration period setting signal Tsur, the feeding speed setting signal Fr is output which is to accelerate the feeding speed from 0 to a forward feeding peak value Wsp of a positive value determined by the forward feeding peak value setting signal Wsr.
2) Subsequently, during the forward feeding peak period Tsp, the feeding speed setting signal Fr is output which is to have the feeding speed maintained as the above forward feeding peak value Wsp.
3) When the short-circuiting determination signal Sd changes from the Low level (the arc period) to the High level (the short-circuiting period), the process enters in the forward feeding deceleration period Tsd determined by the forward feeding deceleration period setting signal Tsdr, and the feeding speed setting signal Fr is output, which has the feeding speed decelerated from the above forward feeding peak value Wsp to 0.
4) Subsequently, during the backward feeding acceleration period Tru determined by the backward feeding acceleration period setting signal Trur, the feeding speed setting signal Fr is output, which has the feeding speed accelerated from 0 to a backward feeding peak value Wrp of a negative value determined by the backward feeding peak value setting signal Wrr.
5) Subsequently, during the backward feeding peak period Trp, the feeding speed setting signal Fr is output, which has the feeding speed maintained at the above backward feeding peak value Wrp.
6) When the short-circuiting determination signal Sd changes from the High level (the short-circuiting period) to the Low level (the arc period), the process enters in the backward feeding deceleration period Trd determined by the backward feeding deceleration period setting signal Trdr, and the feeding speed setting signal Fr is output, which has the feeding speed decelerated from the above backward feeding peak value Wrp to 0.
7) By repeating above 1)-6), the feeding speed setting signal Fr is generated, which varies as a feeding pattern of a positive/negative trapezoidal wave.

The feeding control circuit FC receives an input of the above feeding speed setting signal Fr, and outputs, to the above feeding motor WM, the feeding control signal Fc for feeding the welding wire 1 by the feeding speed Fw corresponding to the value of the feeding speed setting signal Fr.

A current-limiting resistor R is inserted between the above reactor WL and the welding torch 4. The value of this current-limiting resistor R is set to a value (around 0.5~3 ohm) 50 times or more as large as the short-circuiting load (around 0.01~0.03 ohm). When the current-limiting resistor R is inserted into the conducting passage, the energy accumulated in the reactor WL and the reactor of an external cable is quickly discharged.

The transistor TR is parallelly connected to the above current-limiting resistor R, and is on-off controlled according to the driving signal Dr to be described later.

A constriction detection circuit ND receives inputs of the above short-circuiting determination signal Sd, the above voltage detection signal Vd, and the above current detection signal Id, and outputs a constriction detection signal Nd, which changes to the High level at the time point when the voltage increase of the voltage detection signal Vd reaches a reference value while the short-circuiting determination signal Sd is at the High level (the short-circuiting period) with a determination that the formation status of the constriction has reached the reference status, and changes to the Low level at the time point when the short-circuiting determination signal Sd changes to the Low level (the arc period). Also, it may be configured that the constriction detection signal Nd changes to the High level at the time point when the differential value of the voltage detection signal Vd during the short-circuiting period reaches a reference value corresponding thereto. Further, it may be configured that the resistance value of the droplet is calculated by dividing the value of the voltage detection signal Vd by the value of the current detection signal Id, and the constriction detection signal Nd is changed to the High level at the time point when the differential value of this resistance value reaches the reference value corresponding thereto.

A low level current setting circuit ILR outputs a predetermined low level current setting signal Ilr. A current comparison circuit CM receives inputs of this low level current setting signal Ilr and the above current detection signal Id, and outputs a current comparison signal Cm which changes to the High level when Id is less than Ilr, and changes to the Low level when Id is Ilr or more.

A driving circuit DR receives inputs of the above current comparison signal Cm and the above constriction detection signal Nd, and outputs a driving signal Dr to the base terminal of the above transistor TR. The driving signal Dr changes to the Low level when the constriction detection signal Nd changes to the High level, and thereafter changes to the High level when the current comparison signal Cm changes to the High level. Therefore, when the constriction is detected, this driving signal Dr changes to the Low level, the transistor TR is turned to an off status and the current-limiting resistor R is inserted into the conducting passage, and the welding current Iw which is fed to the short-circuiting load decreases rapidly. Then, when the value of the welding current Iw decreases to the value of the low level current setting signal Ilr, the driving signal Dr changes to the High level, and the transistor TR is turned to an on status. Therefore, the decreasing current resistor R is short-circuited and returns to the normal status.

The first arc period setting circuit TA1R outputs a predetermined first arc period setting signal Talr. The first arc period setting signal Talr is configured to set time length of the period short, so that the droplet transfer does not occur during a period determined by this signal.

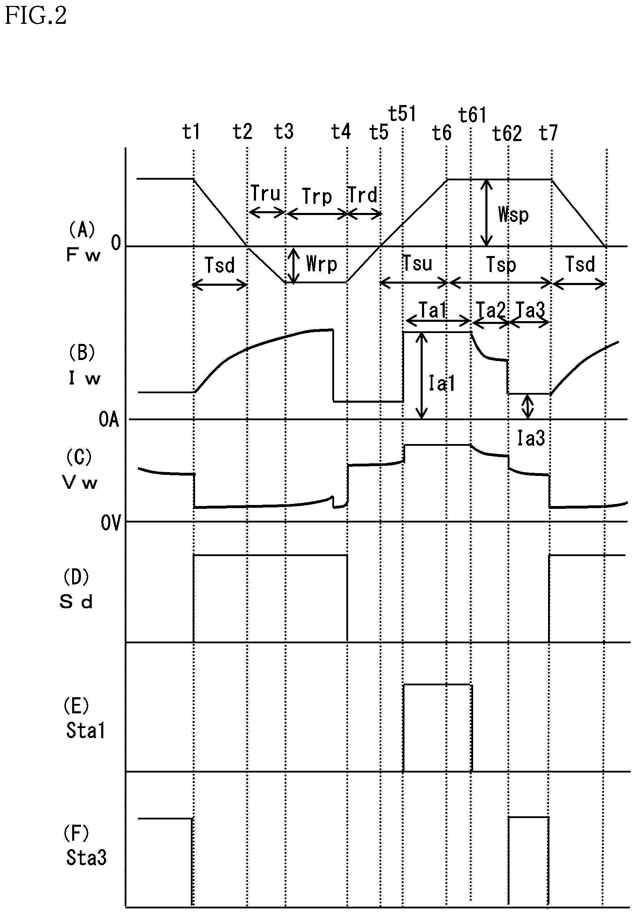

A first arc period circuit STA1 receives inputs of the above short-circuiting determination signal Sd and the above first arc period setting signal Talr, and outputs the first arc period signal Sta1. As shown in Fig.2(E), the first arc period signal Sta1 changes to the High level at the time point (t51) after a change of the short-circuiting determination signal Sd (t4) to the Low level (the arc period) and an elapse of a predetermined delay period Tc (t4-t51), and is maintained at this level during a first arc period Ta1 predetermined by the first arc period setting signal Talr.

The first arc current setting circuit IA1R outputs a predetermined first arc current setting signal Ia1r. The first arc current setting signal Ia1r is set equal to the critical current value or more.

A third arc current setting circuit IA3R outputs a predetermined third arc current setting signal Ia3r.

A current control setting circuit ICR receives inputs of the above short-circuiting determination signal Sd, the above low level current setting signal Ilr, the above constriction detection signal Nd, the above first arc period signal Sta1, the above third arc period signal Sta3, the above first arc current setting signal Ia1r, and the above third arc current setting signal Ia3r, and executes the following processings to output the current control setting signal Icr.
1) During the delay period from the time point when the short-circuiting determination signal Sd changes to the Low level (the arc period) to the time point when the first arc period signal Sta1 changes to the High level, the current control setting signal Icr is output which takes the value of the low level current setting signal Ilr.
2) Thereafter, when the first arc period signal Sta1 is at the High level (the first arc period), the current control setting signal Icr is output which takes the value of the first arc current setting signal Ia1r.
3) During a period from the time point when the first arc period signal Sta1 changes to the Low level to the time point when the third arc period signal Sta3 changes to the Low level (the second arc period and the third arc period), the current control setting signal Icr is output which takes the value of the third arc current setting signal Ia3r.
4) When the short-circuiting determination signal Sd changes to the High level (the short-circuiting period), the current control setting signal Icr is output, which takes a predetermined initial current setting value during a predetermined initial period, and thereafter increases to a predetermined short-circuiting time peak setting value by a predetermined inclination of the short-circuiting time, and maintains its value.
5) After that, when the constriction detection signal Nd changes to the High level, the current control setting signal Icr is output, which takes the value of the low level current setting signal Ilr.

A current discrepancy amplification circuit EI receives inputs of the above current control setting signal Icr and the above current detection signal Id, amplifies a discrepancy between the current control setting signal Icr (+) and the current detection signal Id (-), and outputs a current discrepancy amplification signal Ei.

A power supply characteristic switching circuit SW receives inputs of the above current discrepancy amplification signal Ei, the above voltage discrepancy amplification signal Ev, the above first arc period signal Sta1, and the above third arc period signal Sta3, performs the following processings, and outputs the above discrepancy amplification signal Ea.
1) During the second arc period Ta2 from the time point when the first arc period signal Sta1 changes to the Low level to the time point when the third arc period signal Sta3 changes to the High level, the voltage discrepancy amplification signal Ev is output as the discrepancy amplification signal Ea.
2) During the other periods, the current discrepancy amplification signal Ei is output as the discrepancy amplification signal Ea. According to this circuit, the welding power supply has the constant current characteristics during the short-circuiting period, the delay period, the first arc period Ta1, and the third arc period Ta3, and has the constant voltage characteristics during the second arc period Ta2.

Fig.2 is a timing chart of the respective signals at the welding power supply of Fig.1 which shows the arc welding control method according to an embodiment of the present disclosure. Fig.2(A) shows the temporal variation of the feeding speed Fw, Fig.2(B) shows the temporal variation of the welding current Iw, Fig.2(C) shows the temporal variation of the welding voltage Vw, Fig.2(D) shows the temporal variation of the short-circuiting determination signal Sd, Fig.2(E) shows the temporal variation of the first arc period signal Sta1, and Fig.2(F) shows the temporal variation of the third arc period signal Sta3. Below, the operation of the respective signals are explained with reference to those drawings.

The feeding speed Fw shown in Fig.2(A) is controlled by the value of the feeding speed setting signal Fr output from the feeding speed setting circuit FR of Fig.1. The feeding speed Fw is composed of the forward feeding acceleration period Tsu determined by the forward feeding acceleration period setting signal Tsur of Fig.1, the forward feeding peak period Tsp which lasts until the occurrence of the short-circuiting, the forward feeding deceleration period Tsd determined by the forward feeding deceleration period setting signal Tsdr of Fig.1, the backward feeding acceleration period Tru determined by the backward feeding acceleration period setting signal Trur of Fig.1, the backward feeding peak period Trp which lasts until the occurrence of the arc, and the backward feeding deceleration period Trd determined by the backward feeding deceleration period setting signal Trdr of Fig.1. Further, the forward feeding peak value Wsp is determined by the forward feeding peak value setting signal Wsr of Fig.1, and the backward feeding peak value Wrp is determined by the backward feeding peak value setting signal Wrr of Fig.1. As a result, the backward feeding speed setting signal Fr has a feeding pattern which varies as an approximate trapezoidal wave which projects towards positive and negative sides.

### <Operation during the short-circuiting period, time t1~t4>

When the short-circuiting occurs at time t1 in the forward feeding peak period Tsp, as shown in Fig.2(C), the welding voltage Vw quickly decreases to several volts of the short-circuiting voltage value, and therefore, as shown in Fig.2(D), the short-circuiting determination signal Sd changes to the High level (the short-circuiting period). In response to this, the process enters in the predetermined forward feeding deceleration period Tsd of time t1~t2, and as shown in Fig.2(A), the feeding speed Fw decelerates from the above forward feeding peak value Wsp to 0. For example, it is configured that the forward feeding deceleration period Tsd = 1ms.

As shown in Fig.2(A), the process enters in the predetermined backward feeding acceleration period Tru of time t2~t3, and the feeding speed Fw is accelerated from 0 to the above backward feeding peak value Wrp. During this period, the short-circuiting period continues. For example, it is configured that the backward feeding acceleration period Tru = 1ms.

When the backward feeding acceleration period Tru ends at time t3, as shown in Fig.2(A), the process enters in the backward peak period Trp, and the feeding speed Fw takes the above backward feeding peak value Wrp. The backward feeding peak period Trp continues until the occurrence of the arc at time t4. Therefore, the period of time t1~t4 is the short-circuiting period. The backward feeding peak period Trp is not of a predetermined length, but is around 3ms. Further, for example, it is configured that the backward feeding peak value Wrp = -20--50m/min.

As shown Fig.2(B), the welding current Iw during the short-circuiting period of time t1~t4 takes the predetermined initial current value during the predetermined initial period. Thereafter, the welding current Iw increases by the predetermined inclination of the short-circuiting time, and when it reaches the predetermined peak value of the short-circuiting time, it maintains its value.

As shown in Fig.2(C), the welding voltage Vw starts increasing at around the time point when the welding current Iw reaches the peak value of the short-circuiting time. This is because the constriction is gradually formed at a droplet on a tip of the welding wire 1, due to a pinch force according to the welding current Iw and the backward feeding of the welding wire 1.

Thereafter, when the voltage increase amount of the welding voltage Vw reaches the reference value, it is determined that the formation status of the constriction is at the reference status, and the constriction detection signal Nd of Fig.1 changes to the High level.

In response to the change of the constriction detection signal Nd to the High level, the driving signal Dr of Fig.1 changes to the Low level, and the transistor TR of Fig.1 is turned to the off status and the current-limiting resistor R of Fig.1 is inserted into the conducting passage. At the same time, the current control setting signal Icr decreases to the value of the low level current setting signal Ilr. Therefore, as shown in Fig.2(B), the welding current Iw rapidly decreases from the peak value of the short-circuiting time to the low level current value. Further, when the welding current Iw decreases to the low level current value, the driving signal Dr returns to the High level, and therefore the transistor TR is turned to the on status and the current-limiting resistor R is short-circuited. As shown in Fig.2(B), the welding current Iw maintains its low level current value from the re-occurrence of the arc until the elapse of the predetermined delay period Tc, as the current control setting signal Icr does not change from the low level current setting signal Ilr. Therefore, the transistor TR is in the off status only during the period from the time point when the constriction detection signal Nd changes to the High level to the time point when the welding current Iw decreases to the low level current value. As shown in Fig.2(C), the welding voltage Vw temporarily decreases, as the welding current decreases, and then rapidly increases. The respective parameters above are set, for example, to the following values: The initial current = 40A, the initial period = 0.5ms, the inclination of the short-circuiting time = 180A/ms, the peak value of the short-circuiting time = 400A, the low level current value = 50A, and the delay period Tc = 0.5ms.

### <Operation during the arc period, time t4~t7>

At time t4, as the constriction is developed due to a pinch force according to the welding current Iw and the backward feeding of the welding wire, the arc occurs, and the welding voltage Vw rapidly increases to tens of volts of the arc voltage value as shown in Fig.2(C). Therefore, as shown in Fig.2(D), the short-circuiting determination signal Sd changes to the Low level (the arc period) . In response to this, the process enters in the predetermined backward feeding deceleration period Trd of time t4~t5, and as shown in Fig.2(A), the feeding speed Fw decelerates from the above backward feeding peak value Wrp to 0. For example, it is configured that the backward feeding deceleration period Trd = 1ms.

When the backward feeding deceleration period Trd ends at time t5, the process enters in the predetermined forward feeding acceleration period Tsu of time t5~t6. During this forward feeding acceleration period Tsu, as shown in Fig.2(A), the feeding speed Fw accelerates from 0 to the above forward feeding peak value Wsp. During this period, the arc period continues. For example, it is configured that the forward acceleration period Tsu = 1ms.

When the forward feeding acceleration period Tsu ends at time t6, as shown in Fig.2(A), the process enters in the forward feeding peak period Tsp, and the feeding speed Fw takes the above forward feeding peak value Wsp. During this period as well, the arc period continues. The forward feeding peak period Tsp continues until the occurrence of the short-circuiting at time t7. Therefore, the period of time t4~t7 is the arc period. Further, when the short-circuiting occurs, the process returns to the operation of time t1. The forward feeding peak period Tsp does not take a predetermined value, but is around 5ms. Moreover, for example, it is configured that the forward feeding peak value Wsp = 30-60m/min.

When the arc occurs at time t4, as shown in Fig.2(C), the welding voltage Vw rapidly increases to tens of volts of the arc voltage value. Meanwhile, as shown in Fig.2(B), the welding current Iw maintains its low level current value from time t4 to the end of the delay period Tc. This is because if the current value is increased immediately after the occurrence of the arc, the arc length rapidly becomes larger due to melt of the welding wire caused by the welding current and the back feeding of the welding wire, and as a result the welding status can be unstable.

When the delay period Tc ends at time t51 in the forward feeding acceleration period Tsu, as shown in Fig.2(E), the first arc period signal Sta1 changes to the High level, and the process enters in the predetermined first arc period Ta1 of time t51~t61. During this first arc period Ta1, the constant current control is performed continuously, and as shown in Fig.2(B), the predetermined first arc current Ia1 determined by the first arc current setting signal Ia1r of Fig.1 is fed. As shown in Fig.2(C), the welding voltage Vw is a value determined by the current value and the arc load, and becomes large.

At time t62, after an elapse of the predetermined current decreasing time Td starting from time point t4 of the occurrence of the arc, as shown in Fig.2(F), the third arc period signal Stas3 changes to the High level. The period of time t61~t62 becomes the second arc period Ta2. During this second arc period Ta2, the constant voltage control is performed. As shown in Fig.2(B), the second arc current Ia2 varies according to the arc load, and it takes a value less than the first arc current Ia1 but more than the third arc current Ia3. That is, the output is controlled so that an relationship Ia1>Ia2>Ia3 holds. As shown in Fig.2(C), the welding voltage Vw is controlled to take a predetermined value by the current voltage control, and takes an intermediate value between the voltage value of the first arc period Ta1 and the voltage value of the third arc period Ta3. The second arc period Ta2 does not take a predetermined value, but is around 3~6ms.

The period between time t62 when the third arc period signal Sta3 changes to the High level and time t7 when the short-circuiting occurs is the third arc period Ta3. During this third arc period Ta3, the constant current control is performed. As shown in Fig.2(B), the predetermined third arc current Ia3 determined by the third arc current setting signal Ia3r of Fig.1 is fed. As shown in Fig.2(C), the welding voltage Vw takes a value determined by the current value and the arc load. For example, it is configured that the third arc current Ia3 = 60A. The third arc period Ta3 does not take a predetermined value, but is around 1-2ms.

In the present embodiment, shield gas containing 60 volume percent or more of inert gas is used. When the inert gas is used, in order to stabilize the welding status, practically 60 volume percent or more of the inert gas is contained in the shield gas. As the inert gas, argon gas, helium gas, and so forth are used.

As mentioned above, according to the present embodiment, during the arc period, the first arc period where the first arc current Ia1 is fed, the second arc period where the second arc current Ia2 is fed, and the third arc period where the third arc current Ia3 is fed are switched over time and is controlled so that the relationship Ia1 > Ia2 >Ia3 holds. The first arc current Ia1 is set to be at a critical current value or more at which the droplet can be in a spray transfer status, meaning, according to the present invention, at the critical current value or more, with which the droplet is in a spray transfer status provided that the application period of the current is sufficiently long. Meanwhile, the first arc period is set to a short time length with which no droplet transfer occurs during the first arc period. The second arc current Ia2 is set to be less than the above critical current value by adjusting the output voltage setting signal Er of Fig.1.

Regarding the forward/backward feeding arc welding of the conventional arts, in the case where shield gas primarily composed of inert gas is used, welding current value during the arc period increases and reaches the critical current value or more, the droplet transfers during the arc period. When this occurs, variation of cycle of the short-circuiting period and the arc period becomes large, and the transfer of the droplet does not occur in synchronization with the short-circuiting period. As a result, the welding quality deteriorates.

On the other hand, in the present embodiment, the first arc current Ia1 is set to the critical current value or more with which the droplet is in the spray transfer status, the first arc period is set to a short time length with which the droplet transfer does not occur during the first arc period, and the second arc current Ia2 is set to be less than the above critical current value. Therefore, according to the present invention, the droplet does not transfer during the arc period, but transfers in synchronization with the short-circuiting period. As a result, the repeating cycle of the short-circuiting period and the arc period is stabilized to make the welding quality favorable. Further, in the present embodiment, heat input to the base material can be larger by feeding the high current value of the first arc current Ia1 in a range that the droplet does not transfer, and therefore the bead appearance becomes favorable.

Further, according to the present embodiment, the constant current control is performed during the first arc period. Thus, in the present embodiment, the process can be precisely controlled so that the droplet does not transfer during the first arc period. Further, the heat input during the first arc period can be precisely controlled. As a result, the welding quality can improve.

Further, according to the present embodiment, the constant voltage control is performed during the second arc period. Thus, in the present embodiment, the average arc length can be controlled to take an appropriate value. As a result, the welding status can be more stabilized.

## Claims

1. An arc welding control method comprising:
using shield gas containing 60 volume percent or more of inert gas, alternately switching feeding of a welding wire between forward feeding and backward feeding, and repeating a short-circuiting period and an arc period;
the method being **characterised by** the following:
switching a first arc period, a second arc period, and a third arc period over time during the arc period, with a first arc current (Ia1) being fed for the first arc period, a second arc current (Ia2) being fed for the second arc period, a third arc current (Ia3) being fed for the third arc period in a manner such that a relationship Ia1 > Ia2 > Ia3 holds,
wherein the first arc current (Ia1) is set to a critical current value or more where a droplet transfer status is a spray transfer status, the first arc period is set to a short time length that a droplet transfer does not occur during the first arc period, and as a result a droplet transfer occurs in synchronization with the short-circuiting period; and
the second arc current (Ia2) is set to be less than the critical current value.

2. The arc welding control method according to claim 1, wherein a constant current control is performed during the first arc period.

3. The arc welding control method according to claim 1, wherein a constant voltage control is performed during the second arc period.

4. The arc welding control method according to claim 2, wherein a constant voltage control is performed during the second arc period.

## Patentansprüche

1. Verfahren zur Steuerung von Lichtbogenschweißen, umfassend:
Verwenden von Schutzgas, das 60 Volumenprozent oder mehr Inertgas enthält, abwechselndes Umschalten der Zuführung eines Schweißdrahtes zwischen Vorwärtszuführung und Rückwärtszuführung und Wiederholen einer Kurzschlussperiode und einer Lichtbogenperiode; wobei das Verfahren durch Folgendes gekennzeichnet ist:
Schalten einer ersten Lichtbogenperiode, einer zweiten Lichtbogenperiode, und einer dritten Lichtbogenperiode über die Zeit während der Lichtbogenperiode, wobei für die erste Lichtbogenperiode ein erster Lichtbogenstrom (Ia1) zugeführt wird, für die zweite Lichtbogenperiode ein zweiter Lichtbogenstrom (Ia2) zugeführt wird, für die dritte Lichtbogenperiode ein dritter Lichtbogenstrom (la3) zugeführt wird, in einer Weise, dass eine Beziehung Ia1 > Ia2 > Ia3 gilt,
wobei der erste Lichtbogenstrom (la1) auf einen kritischen Stromwert oder mehr gesetzt wird, bei dem ein Tröpfchenübertragungsstatus ein Sprühübertragungsstatus ist, wobei die erste Lichtbogenperiode auf eine kurze Zeitlänge eingestellt ist, dass es während der ersten Lichtbogenperiode nicht zu einer Tröpfchenübertragung kommt, und als Ergebnis eine Tröpfchenübertragung in Synchronisation mit der Kurzschlussperiode erfolgt; und
wobei der zweite Lichtbogenstrom (Ia2) kleiner als der kritische Stromwert eingestellt ist.

2. Verfahren zur Steuerung von Lichtbogenschweißen nach Anspruch 1, wobei während der ersten Lichtbogenperiode eine Konstantstromregelung durchgeführt wird.

3. Verfahren zur Steuerung von Lichtbogenschweißen nach Anspruch 1, wobei während der zweiten Lichtbogenperiode eine Konstantspannungssteuerung durchgeführt wird.

4. Verfahren zur Steuerung von Lichtbogenschweißen nach Anspruch 2, wobei während der zweiten Lichtbogenperiode eine Konstantspannungssteuerung durchgeführt wird.

## Revendications

1. Procédé de commande de soudage à l'arc électrique comprenant :
en utilisant un gaz de protection contenant 60 volumes pour-cent ou plus de gaz inerte, la commutation en alternance de l'alimentation d'un fil de soudage entre une alimentation vers l'avant et une alimentation vers l'arrière et la répétition d'une période de court-circuit et d'une période d'arc ;
le procédé étant **caractérisé par** ce qui suit :
la commutation d'une première période d'arc, d'une deuxième période d'arc, et d'une troisième période d'arc en fonction du temps au cours de la période d'arc, un premier courant d'arc (Ia1) étant délivré pendant la première période d'arc, un deuxième courant d'arc (Ia2) étant délivré pendant la deuxième période d'arc, un troisième courant d'arc (Ia3) étant délivré pendant la troisième période d'arc d'une telle manière qu'une relation Ia1 > Ia2 > Ia3 est respectée,
dans lequel le premier courant d'arc (Ia1) est défini de manière à être supérieur ou égal à une valeur de courant critique à laquelle un état de transfert de gouttelette est un état de transfert de pulvérisation, la première période d'arc est définie à une courte période de temps telle qu'un transfert de gouttelette ne se produit pas au cours de la première période d'arc et, en résultat, un transfert de gouttelette se produit de manière synchronisée avec la période de court-circuit ; et
le deuxième courant d'arc (Ia2) est défini de manière à être inférieur à la valeur de courant critique.

2. Procédé de commande de soudage à l'arc électrique selon la revendication 1, dans lequel une commande à courant constant est exécutée pendant la première période d'arc.

3. Procédé de commande de soudage à l'arc électrique selon la revendication 1, dans lequel une commande à tension constante est exécutée pendant la deuxième période d'arc.

4. Procédé de commande de soudage à l'arc électrique selon la revendication 2, dans lequel une commande à tension constante est exécutée pendant la deuxième période d'arc.
